## Europäisches Patentamt
## European Patent Office
## Office européen des brevets

(11) Veröffentlichungsnummer: **0 019 913**
**A1**

# EUROPÄISCHE PATENTANMELDUNG

Anmeldenummer: 80102970.3

(51) Int. Cl.³: **H 01 J 31/49,** H 04 N 5/33

Anmeldetag: 28.05.80

(30) Priorität: 30.05.79 DE 2922056

(71) Anmelder: **Heimann GMBH, Weher Köppel 6, D-6200 Wiesbaden 1 (DE)**

(43) Veröffentlichungstag der Anmeldung: **10.12.80 Patentblatt 80/25**

(72) Erfinder: **Steinhage, Peter-Wilhelm Dr. Dipl.-Phys., Am Langels-Weinberg 4, D-6200 Wiesbaden (DE)**

(74) Vertreter: **Mehl, Ernst, Dipl.-Ing., Postfach 22 01 76, D-8000 München 22 (DE)**

(84) Benannte Vertragsstaaten: **FR GB**

(54) **Wärmebildaufnahmeröhre.**

㊼ Bei einer Wärmebildaufnahmeröhre mit einem Eintrittsfenster (7) aus einem elektrisch leitfähigen Material, einem wärmebildumsetzenden Target (5) und einem Elektronenstrahlsystem (3) zum Abtasten des Targets (5), bei der die einfallende Strahlung durch einen mechanischen Unterbrecher (9) als Modulator unmittelbar vor dem Eintrittsfenster (7) moduliert wird, wird erfindungsgemäß vorgeschlagen, das Eintrittsfenster (7) galvanisch vom Target (5) zu trennen, insbesondere auf Erdpotential zu legen. Dadurch wird das Target von elektrischer Beeinflussung durch den Modulator (9) abgeschirmt.

Heimann GmbH                          Unser Zeichen
Wiesbaden                             VPA 79 P 8022 EUR

Wärmebildaufnahmeröhre

Die Erfindung betrifft eine Wärmebildaufnahmeröhre mit einem Eintrittsfenster aus einem elektrisch leitfähigen Material, einem wärmebildumsetzenden Target und einem Elektronenstrahlsystem zum Abtasten des Targets, wobei vor dem Eintrittsfenster ein mechanisch bewegter Wärmestrahlenmodulator angeordnet ist.

Bei einer Wärmebildaufnahmeröhre mit einem isolierenden Target, wie es beispielsweise bei einer pyroelektrischen Bildaufnahmeröhre der Fall ist, wird die einfallende Wärmestrahlung über einen mechanischen Modulator periodisch zerhackt. Dies ist für eine gute Bildauflösung und zur Erzeugung stehender Bilder erforderlich. Der Modulator besteht normalerweise aus einer sich periodisch drehenden Blende mit einer Hellphase und einer Dunkelphase. Er befindet sich dicht vor dem Eintrittsfenster der Wärmebildaufnahmeröhre.

RH 1 Ode /29.05.79

0019913

Eine solche Anordnung ist bekannt und beispielsweise in der DE-AS 22 23 270 beschrieben. Das Eintrittsfenster besteht aus einem isolierenden Material und trägt auf der Innenseite eine elektrisch leitende Schicht, die mit einer Signalelektrodenschicht auf dem pyroelektrischen Target galvanisch verbunden ist.

Bekannt ist auch, beispielsweise aus der Zeitschrift "IEEE Transactions on Electron Devices" Vol. ED-21, Nr. 8, Aug. 1974, S. 462-469, für Wärmestrahlen von 8 bis 14 /um Wellenlänge das Eintrittsfenster aus Germanium zu machen. Das Target ist hinter dem Eintrittsfenster auf diesem in elektrisch leitender Verbindung montiert. Das Germanium selbst ist ebenfalls elektrisch leitfähig. Für kleinere Wellenlängen im sog. zweiten atmosphärischen Fenster verwendet man das ebenfalls elektrisch leitfähige Silicium.

Über solche leitenden Eintrittsfenster werden im Betrieb von dem dicht davor bewegten Modulator kapazitiv Bildstörungen auf die Signalelektrode eingestreut. Es sind Anordnungen erhältlich, wonach zum Verhindern solcher Einstreuungen zwischen dem Eintrittsfenster und dem Modulator grobmaschige einfädige Netze zur elektrischen Abschirmung vorgesehen sind. Die Streuung und Absorption an solchen Netzen sind jedoch einer guten Bildqualität abträglich.

Der vorliegenden Erfindung liegt die Aufgabe zugrunde, das elektrische Beeinflussen des Modulators auf das Target und die Signalelektrode zu verhindern, ohne die optischen Eigenschaften zu verschlechtern.

Zur Lösung dieser Aufgabe wird bei einer Wärmebildaufnahmeröhre der eingangs genannten Art erfindungsgemäß vorgeschlagen, daß das Eintrittsfenster zur
Abschirmung des Targets gegen den Wärmestrahlenmodulator galvanisch von dem Target getrennt ist.

Von Vorteil ist eine elektrische Erdung des Eintrittsfensters.

Das Eintrittsfenster besteht dabei vorzugsweise aus
Germanium oder Silicium oder aus einem nicht leitfähigen
Material, das mit einer strahlungsdurchlässigen elektrisch leitfähigen Schicht bedeckt ist.

Bei einer erfindungsgemäßen Anordnung bewirkt das
Eintrittsfenster selbst eine elektrische Abschirmung
des Targets gegen den bewegten Modulator. Das Target
wird dadurch optisch nicht beeinflußt.

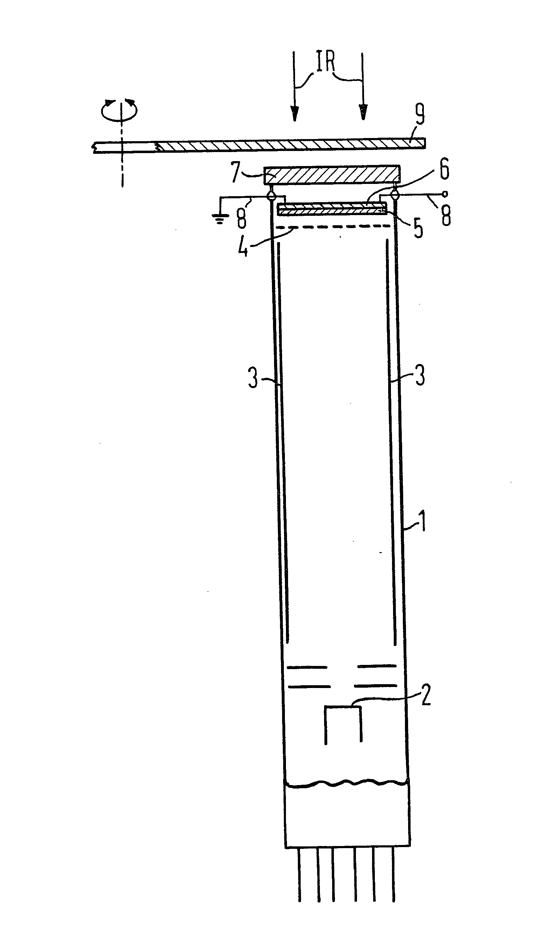

In der Zeichnung ist die erfindungsgemäße Anordnung
schematisch dargestellt.

Eine Wärmebildaufnahmeröhre hat einen Glaskolben 1,
im Inneren an einem Ende ein Elektronenstrahlerzeugersystem 2, im Längsverlauf der Röhre ein Elektronenstrahlsystem 3 und am anderen Ende ein Anodengitter 4.
Davor liegt ein pyroelektrisches Target 5 aus beispielsweise Triglycinsulfat, das auf der Vorderseite
eine Signalelektrode 6 mit elektrischem Anschluß 8
trägt. Das vordere Ende der Wärmebildaufnahmeröhre
trägt ein Eintrittsfenster 7 aus Germanium, durch das die mit IR bezeichnete Wärmestrahlung auf das Target 5 gelangen kann. Zwischen der Wärmestrahlenquelle und dem Eintrittsfenster 7 liegt jedoch unmittelbar vor dem Eintrittsfenster 7 eine Modulatorblende 9, die durch Rotation periodisch die Wärmestrahlung einblendet und ausblendet.

Das Eintrittsfenster 7 ist mit Erdpotential verbunden und galvanisch getrennt vom Target 5 von der Signalelektrode 6 sowie von der Zuleitung 8. Dadurch können sich keine örtlichen elektrischen Ladungen im Eintrittsfenster 7 aufbauen, die durch die Modulatorbewegung verursacht wurden. Eine kapazitive Einkopplung der Modulatorbewegung auf das Target 5 ist damit ausgeschaltet.

4 Patentansprüche
1 Figur

Patentansprüche

1. Wärmebildaufnahmeröhre mit einem Eintrittsfenster aus einem elektrisch leitfähigen Material, einem wärmebildumsetzenden Target und einem Elektronenstrahlsystem zum Abtasten des Targets, wobei vor dem Eintrittsfenster ein mechanisch bewegter Wärmestrahlenmodulator angeordnet ist, d a d u r c h   g e k e n n z e i c h n e t , daß das Eintrittsfenster (7) zur Abschirmung des Targets (5) gegen den Wärmestrahlenmodulator (9) galvanisch von dem Target (5) getrennt ist.

2. Wärmebildaufnahmeröhre nach Anspruch 1, d a d u r c h   g e k e n n z e i c h n e t , daß das Eintrittsfenster (7) geerdet ist.    -

3. Wärmebildaufnahmeröhre nach Anspruch 1 oder 2, d a d u r c h   g e k e n n z e i c h n e t , daß das Eintrittsfenster (7) aus Germanium oder Silicium besteht.

4. Wärmebildaufnahmeröhre nach Anspruch 1 oder 2, d a d u r c h   g e k e n n z e i c h n e t , daß das Eintrittsfenster (7) aus einem nicht leitfähigen Material besteht, das mit einer strahlungsdurchlässigen elektrisch leitfähigen Schicht bedeckt ist.

0019913

1/1

Europäisches Patentamt

**EUROPÄISCHER RECHERCHENBERICHT**

0019913

Nummer der Anmeldung

EP 80102970.3

| Kategorie | EINSCHLÄGIGE DOKUMENTE Kennzeichnung des Dokuments mit Angabe, soweit erforderlich, der maßgeblichen Teile | betrifft Anspruch |
|---|---|---|
| | US - A - 3 324 327 (KODA) + Spalte 2, Zeilen 40-52; Fig. 1 + | 1,3 |
| | -- | |
| | DE - A1 - 2 659 358 (TEXAS) + Seite 11, Zeilen 5-12; Fig. 4 + | 3 |
| | -- | |
| | US - A - 4 037 131 (CLARK) + Spalte 1, Zeilen 66-68; Spalte 2, Zeile 1; Fig. 1 + | 3 |
| | -- | |
| | US - A - 3 928 768 (CRONWELL) + Spalte 2, Zeilen 29-37; Fig. 3 + | 1 |
| | -- | |
| D | DE - A - 2 223 270 (THOMSON) | 1 |
| | ---- | |

**KLASSIFIKATION DER ANMELDUNG (Int.Cl. 3)**

H 01 J 31/49
H 04 N 5/33

**RECHERCHIERTE SACHGEBIETE (Int. Cl. 3)**

H 01 J 31/00
H 01 J 29/00
H 04 N 5/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

| X | Der vorliegende Recherchenbericht wurde für alle Patentansprüche erstellt. |
|---|---|

| Recherchenort WIEN | Abschlußdatum der Recherche 08-08-1980 | Prüfer DIMITROW |
|---|---|---|

EPA form 1503.1 06.78